# EUROPÄISCHE PATENTSCHRIFT

(11) **EP 0 982 433 B1**
(45) Veröffentlichungstag und Bekanntmachung des Hinweises auf die Patenterteilung: **28.07.2004**
(21) Anmeldenummer: 99115643.1
(22) Anmeldetag: 07.08.1999
(51) Int. Cl.: D21D 5/16

(54) **Siebkorb für einen Drucksortierer mit einem entfern- und ersetzbaren zylindrischen Sieb**
Screening cylinder for a pressure screening device having a replaceable cylindrical screen
Tambour cylindrique pour un appareil de tamisage sous pression comportant un tamis cylindrique remplaçable

(30) Priorität: 27.08.1998 US 141247
(43) Veröffentlichungstag der Anmeldung: 01.03.2000
(73) Patentinhaber: Voith Paper Patent GmbH, 89522 Heidenheim (DE)
(72) Erfinder: Doelle, Klaus, Appleton, WI 54915 (US); Lorenz, Kurt W., Appleton, WI 54915 (US)

(56) Entgegenhaltungen:
- US-A- 3 530 986
- US-A- 5 326 470

## Beschreibung

Die Erfindung bezieht sich auf einen Siebkorb zum Filtern von Feststoffen und enthaltenen Flüssigkeiten, insbesondere zum Entfernen von Verunreinigungen aus wässrigen Fasersuspensionen.

Siebsysteme, die Siebkörbe dieser Art verwenden, werden bei Herstellungsprozessen häufig dazu benutzt, um größere Teilchen aus einer Flüssigkeit/Feststoff-Suspension auszuscheiden. Anwendungen für Siebsysteme beinhalten zum Beispiel die Verarbeitung von Zellstoff, mechanischem Holzschliff, gebleichtem oder ungebleichtem Kraftzellstoff, Wellpappe, gemischtem Zeitungspapier, Deinkingstoff, Altpapier oder jeder anderen Art von Fasern.

Das System nimmt normalerweise mehrere Kubikmeter flüssige oder feste Fasersuspension pro Minute auf und teilt die größeren Teilchen durch einen mit einem Siebkorb versehenen Drucksortierer ab, wodurch gewöhnlich ein Gutstofffluss (der kleineren Teilchen) und ein Spuckstofffluss (der größeren Teilchen) entsteht. Im Gutstoff werden die Fasern aufkonzentriert und im Spuckstoff die faserfremden Verunreinigungen. Dieser Filtervorgang wird als Sortieren bezeichnet. Ein Beispiel für einen Drucksortierer ist das Modell 400, das bei Voith Sulzer erhältlich ist, dem Anmelder der vorliegenden Erfindung.

Die US 3,530,986 zeigt Entwässerungsvorrichtungen, die auch für Papierfaserstoff verwendet werden können. Sie enthalten Siebhülsen aus Drahtgeflecht, die in Vibrationen versetzt werden können.

Drucksortierer filtem die flüssige bzw. feste Suspension oft durch einen geschlitzten oder gelochten zylindrischen Siebkorb. Die bekannten Ausführungen der Siebkörbe sind verhältnismäßig teuer und wenn das Filterelement des Siebkorbes bricht, muß der Drucksortierer abgestellt werden. Der Siebkorb wird dann ersetzt und der Drucksortierer wieder in Betrieb genommen. Der defekte Siebkorb wird im allgemeinen weggeworfen, weil eine Reparatur zu schwierig wäre.

Die Schwierigkeiten bei der Reparatur des Siebkorbes sind hauptsächlich auf die relativ komplizierte Struktur desselben zurückzuführen. In den US-Patenten 3,716,144 und 5,255,790 zum Beispiel ist veröffentlicht, wie Siebkörbe aus einer Vielzahl von Drähten, gesichert durch Verschweißen oder Verlöten mit querlaufenden Trägerelementen, hergestellt werden. Die Drähte sind profiliert und in solchem Abstand voneinander angebracht, daß ununterbrochene Siebschlitze genau ununterbrochenen Unterstützungsschlitzen zugeordnet sind, wobei die letzteren mit Abständen quer zu den Trägerelementen verlaufen.

Im US- Patent 5,513,757 ist ein verbesserter Siebkorb mit ununterbrochen geschnittenem Schlitz veröffentlicht, der eine ausgezeichnete strukturelle Integrität und ununterbrochene Siebschlitze von einheitlicher Breite hat. Dieser Siebkorb hat jedoch eine verhältnismäßig komplizierte Struktur und ist aus diesem Grund recht teuer in der Herstellung. Außerdem muß der Korb, wenn er defekt wird, aus dem Drucksortierer entfernt, weggeworfen und durch einen anderen ersetzt werden. Wegen der strukturellen Komplexität des Korbes ist es zu schwierig, ihn zu reparieren; deswegen muß der gesamte Siebkorb weggeworfen werden.

Deshalb besteht Bedarf nach einem Siebkorb, der einfach repariert werden kann.

Die Aufgabe der vorliegenden Erfindung liegt darin, einen Siebkorb anzubieten, dessen Filterelement leicht ersetzbar ist.

Diese Aufgabe wird, wie in den Ansprüchen 1, 3, 18 oder 19 beschrieben, gelöst. Die Unteransprüche geben günstige Ausgestaltungen der Erfindung an. Gemäß dem Anspruch 1 enthält der Siebkorb ein zylindrisches, perforiertes Filterelement, umliegende und an den gegenüberliegenden Seiten des Filterelements befestigte Verankerungsbänder, mindestens zwei Stützringe, die das Filterelement umgeben, und Vorrichtungen, um die Stützringe zwischen axial zusammengezogenen Positionen, gelöst von den Verankerungsbändern und axial ausgedehnten Positionen, mit befestigten Verankerungsbändem anzupassen und das Filterelement axial zu spannen. Die Unteransprüche geben günstige Ausgestaltungen der Erfindung an.

Wenn sie das erste Mal verwendet werden, sind die Verankerungsbänder verhältnismäßig biegsam. Das ermöglicht, daß die Verankerungsbänder zum Einsetzen des zylindrischen, perforierten Filterelements innerhalb der Stützringe deformiert werden.

Wahlweise werden die oberen und unteren Stützringe in Segmente geteilt, die leicht demontiert und wieder zusammengebaut werden können, um ein Entfernen des schadhaften, zylindrischen, perforierten Filterelements und die Installation eines neuen Filterelements zu erleichtern.

Vorteilhaft ist, daß der Siebkorb einen wiederverwendbaren, starren Rahmen hat, der sich gut mit einem austauschbaren perforierten Filterelement verbinden läßt.

Diese und andere Ziele, Eigenschaften und Vorteile der vorliegenden Erfindung werden anhand der folgenden detaillierten Beschreibung bevorzugter Anwendungsvarianten derselben offenbar, die auch in den beigefügten Zeichnungen dargestellt sind.

Die Zeichnungen zeigen:
- Fig. 1:: einen Siebkorb nach der vorliegenden Erfindung aus perspektivischer Sicht dar;
- Fig. 2:: eine Querschnittsdarstellung durch den Siebkorb, der in Fig. 1 dargestellt ist;
- Fig. 3A:: eine Querschnittsdarstellung durch das zylindrische, perforierte Filterelement, das unter Spannung im Rahmen des Siebkorbs befestigt ist;
- Fig. 3B:: eine Querschnittsdarstellung durch das zylindrische, perforierte Filterelement, wenn es vom Rahmen des Siebkorbs gelöst ist;
- Fig. 4:: das zylindrische, perforierte Filterelement, das zusammengedrückt ist, um in den Rahmen des Siebkorbes eingesetzt werden zu können, von oben;
- Fig. 5:: einen alternativ aufgebauten Siebkorb, der einen segmentierten oberen Stützring und einen segmentierten unteren Stützring hat, perspektivisch dar;
- Fig. 6:: eine Querschnittsdarstellung durch eine weitere alternative Siebkorbvariante; und
- Fig. 7:: eine Querschnittsdarstellung durch einen Siebkorb mit einem Filterelement, bei dem gestaffelte Stangen mit dem Netz verflochten sind.

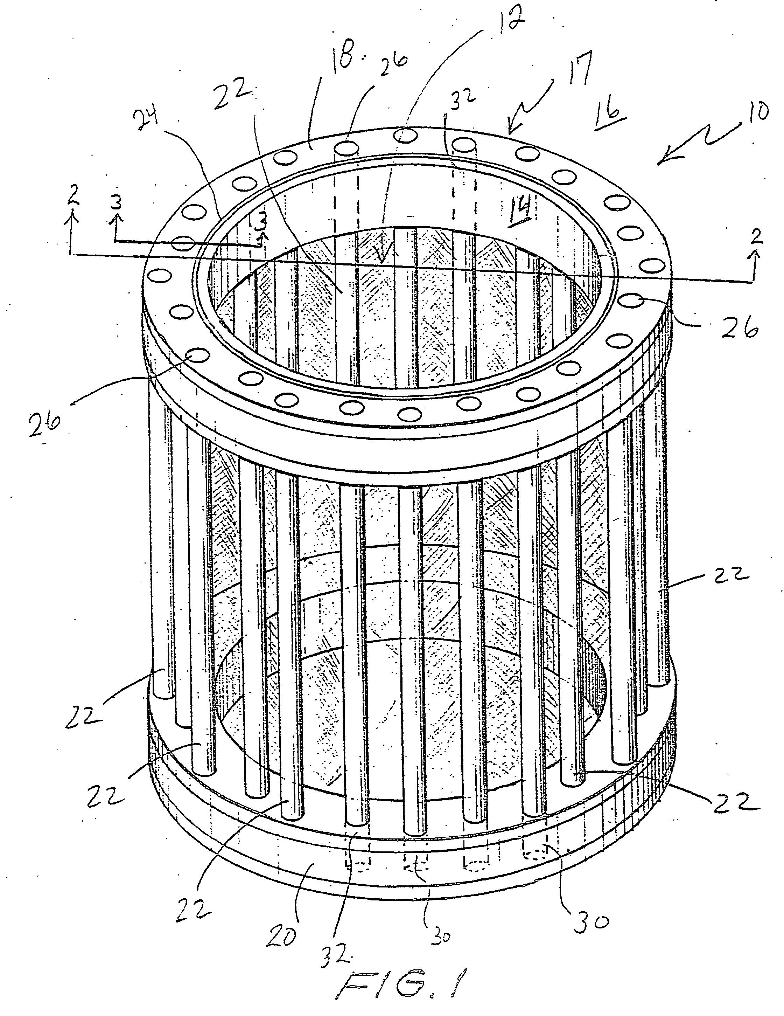

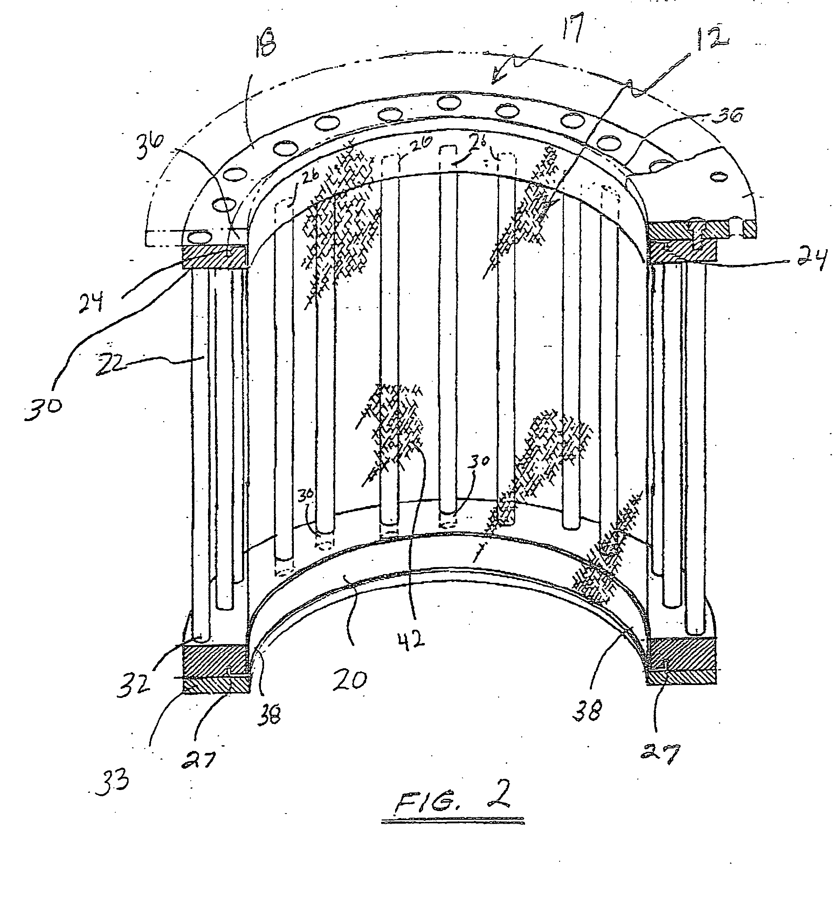

Fig. 1 stellt einen Siebkorb 10 für das Filtern von wässrigen Fasersuspensionen aus perspektivischer Sicht dar. Fig. 2 zeigt eine Querschnittsdarstellung des Siebkorbes 10 (dabei wurden in dieser Ansicht zur leichteren Darstellung mehrere Teile zum Korb hinzugefügt, die in Fig. 1 nicht gezeigt sind). Bezogen auf die Figuren 1 und 2 beinhaltet der Siebkorb 10 ein entfern- und ersetzbares, zylindrisches, perforiertes Filterelement 12, das eine innere Zuführungsseite 14 und eine äußere Akzeptseite 16 hat. Der Siebkorb 10 hat auch einen starren Rahmen 17, der einen oberen Stützring 18, einen unteren Stützring 20 und eine Vielzahl von Haltestangen 22 umfaßt, die sich zwischen dem oberen und dem unteren Stützring 18, 20 erstrecken. Bezeichnend ist, daß der wiederverwendbare, starre Rahmen 17 mit dem entfern- und ersetzbaren, zylindrischen, perforierten Filterelement 12 zusammenarbeitet, was ein wesentliches Merkmal des Siebkorbs 10 der vorliegenden Erfindung ist.

Der obere Stützring 18 beinhaltet eine obere kreisförmige Verankerungsnut 24 und eine Vielzahl von um den Kreisumfang verteilten, oberen Gewindeöffnungen 26. In gleicher Weise enthält der untere Stützring 20 eine untere kreisförmige Verankerungsnut 27 (Fig. 2) und eine Vielzahl von um den Kreisumfang verteilten, unteren Gewindeöffnungen 30, von denen jede nach einer entsprechenden gegenüberliegenden oberen Gewindeöffnung 26 ausgerichtet ist. Bezogen auf Fig. 2, könnte der Siebkorb auch eine Montageflansch 31 einschließen, um den Siebkorb in könnte der Siebkorb auch eine Montageflansch 31 einschließen, um den Siebkorb in einem Drucksortierer anzubringen (nicht dargestellt). Die Montageflansch könnte an den unteren oder oberen Stützringen angebracht sein oder es könnten an beiden Stützringen 18, 20 Flanschen angebracht sein: Fig. 2 zeigt auch eine Klammer 33, die über der äußeren axialen Seite des unteren Stützrings 20 angebracht ist, um dabei mitzuhelfen, das Filterelement 12 in der Verankerungsnut 27 zu halten. Obwohl die Klammer nur in Verbindung mit dem unteren Stützring montiert gezeigt ist, wird ein jeder mit gewöhnlichen Fähigkeiten ausgestattete erkennen, daß genauso eine Klammer an die axiale Außenseite des oberen Stützrings 18 montiert werden kann.

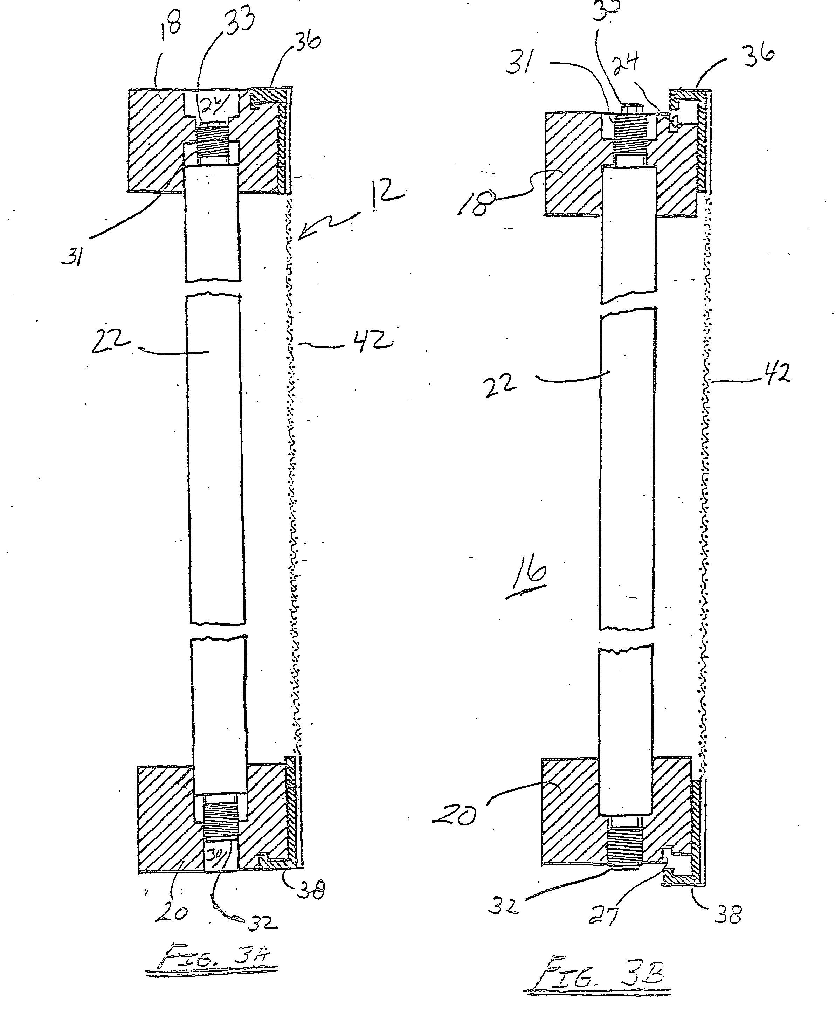

Fig. 3A zeigt eine Querschnittsdarstellung durch die Linie 3-3, wie sie in Fig. 1 dargestellt ist. Bei den Figuren 2 und 3A weist das zylindrische Sieb 12 ein U-förmiges Band auf, das als obere Verankerung 36 dient und das mit der oberen, kreisförmigen Verankerungsnut 24 verbunden werden kann sowie eine ähnlich geformte untere Verankerung, die mit der unteren, kreisförmigen Verankerungsnut 27 verbunden -werden kann. Ein zylindrisches Netz 42 ist gesichert zwischen der oberen und der unteren Verankerung 36, 38 angebracht. Bei dieser Betrachtung ist das zylindrische, perforierte Filterelement 12 mit dem oberen und unteren Stützring 18, 20 des Rahmens 17 verbunden. Größe und Form der Perforation des zylindrischen Netzes wird entsprechend der Mindestpartikelgröße, die aus der wässrigen Fasersuspension entfernt werden soll, gewählt.

Bemerkenswert ist, daß jede einzelne der Vielzahl an Haltestangen 22, die sich zwischen den Stützringen 18, 20 erstrecken, an den Enden entgegengesetzte Gewinde 31, 32 hat, die wiederum mit den oberen und unteren Gewindeöffnungen 26, 30 verbunden sind. Wenn die Haltestangen 22 in einer Richtung gedreht werden, nimmt der Abstand zwischen den Stützringen 18, 20 wegen der entgegengesetzten Gewinde 31, 32 der Haltestangen 22 ab. Die Drehung der Stangen in die entgegengesetzte Richtung vergrößert den Abstand zwischen den Stützringen 18, 20. Jede der Haltestangen beinhaltet einen Schraubenkopf 33, der das Drehen der Stangen vereinfacht.

Fig. 3B zeigt eine Querschnittsdarstellung, die der in Fig. 3A, mit der Ausnahme, daß die Haltestangen 22 gedreht wurden, um das Filterelement 12 vom Rahmen 17 zu lösen, ähnlich ist. Während die Stangen 22 gedreht sind, um das Filterelement 12 zu lösen, ist der Abstand zwischen dem oberen und dem unteren Stützring 18, 20 vermindert, weil jede Stange Enden mit entgegengesetzten Gewinden 31, 32 hat.

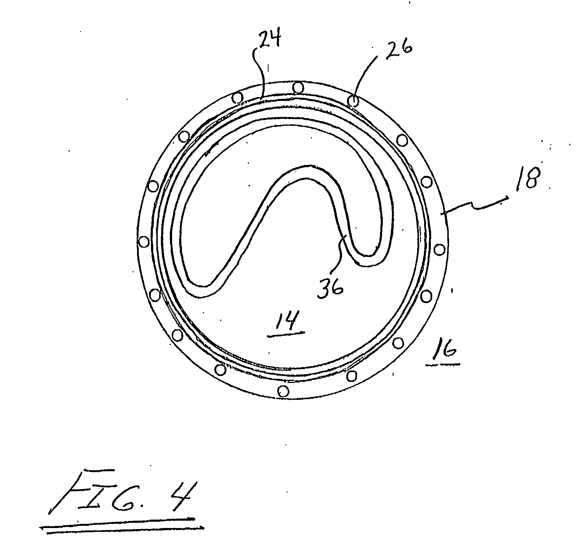

In einer ersten Anwendungsvariante sind die oberen und unteren Verankerungen 36, 38 flexibel. Das ermöglicht, daß die Verankerungen 36, 38 zusammengedrückt werden können, so daß das zylindrische, perforierte Filterelement 12 in den starren Rahmen 17 eingesetzt werden kann. Fig. 4 zeigt das zylindrische, perforierte Filterelement 12 von oben, zusammengedrückt, um in den Rahmen 17 eingesetzt zu werden. Besonders die obere und untere Verankerung 36, 38 und das zylindrische Netz 42 (nicht dargestellt) sind gefaltet, damit das zylindrische, mit Maschen versehene Filterelement 12 im Rahmen angebracht werden kann. Das zylindrische Filterelement 12 wird so eingesetzt, daß die obere Verankerung 36 sich senkrecht zur Achse über die obere, kreisförmige Verankerungsnut 24 und die untere Verankerung 38 sich senkrecht zur Achse über die untere, kreisförmige Verankerungsnut 40 erstreckt, wie es in Fig. 3B gezeigt ist. Das zylindrische Filterelement 12 wird dann entfaltet, damit es seine zylindrische Form wiedererhält. Die drehbaren Haltestangen 22 werden dann gedreht, damit der Abstand zwischen dem oberen Stützring 18 und dem unteren Stützring 20 zunimmt, was dazu führt, daß die Verankerungen 36, 38 in ihren entsprechenden Verankerungsnuten 24, 27 fixiert werden. Das wird außerdem das Netz 42 des zylindrischen Filterelements 12 in axialer Richtung spannen.

Um das zylindrische Filterelement 12 vom Rahmen 17 zu entfernen, werden die Haltestangen 22 in der entgegengesetzten Richtung gedreht, um den Abstand zwischen den Stützringen 18, 20 zu verringern. Wenn der Abstand sich verkleinert, lösen sich die Verankerungen 36, 38 aus ihren entsprechenden Verankerungsnuten 24, 27. Die obere und die untere Verankerung 36, 38 werden dann zusammengedrückt, wie es in Fig. 4 gezeigt ist und das zylindrische Maschenfilterelement 12 wird aus dem Inneren des Rahmens 17 entfernt.

Der Vorteil ist, daß im Falle eines Defekts des Siebkorbs 10 (zum Beispiel eines Risses im Netz 42) der Drucksortierer ausgeschaltet und geöffnet wird. Der Siebkorb 10 wird dann entfernt und durch einen anderen Siebkorb ersetzt. Der Drucksortierer wird dann geschlossen und wieder in Betrieb genommen. Der Siebkorb 10 wird repariert, indem man das defekte, zylindrische, perforierte Filterelement 12 entfernt und durch ein neues zylindrisches, perforiertes Filterelement ersetzt.

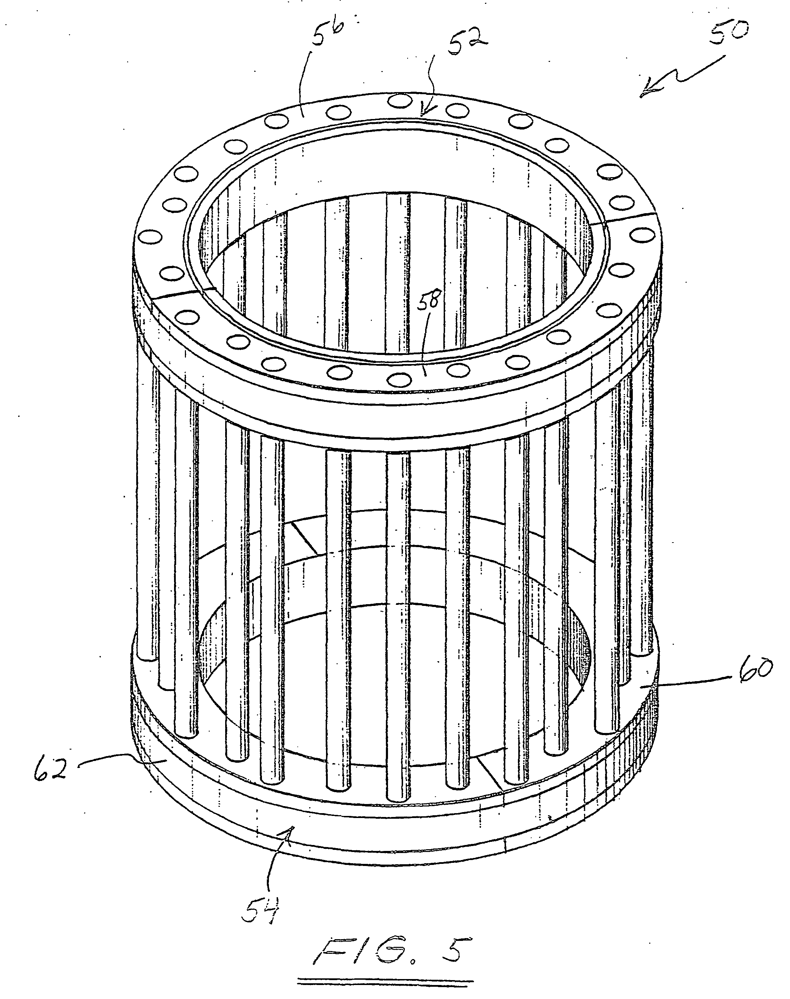

In einer zweiten Anwendungsvariante ist die obere und untere Verankerung 36, 38 starr. Deswegen kann das zylindrische, perforierte Filterelement 12 nicht gefaltet werden, um es in den Rahmen 17 einsetzen zu können. Fig. 5 zeigt eine perspektivische Darstellung des Siebkorbrahmens 50, der für die Verwendung mit einem zylindrischen Maschenfilterelement mit starrer oberer und unterer Verankerung 36, 38 geeignet ist. Bedeutsam ist, daß der Siebkorbrahmen 50 obere und untere Stützringe 52, 54 enthält, die in mehrere Segmente aufgeteilt werden können. Zum Beispiel der obere Stützring 52 beinhaltet halbkreisförmige Segmente 56, 58 und der untere Stützring 54 beinhaltet halbkreisförmige Segmente 60, 62. Um den Siebkorb 10 zu montieren, werden die unteren halbkreisförmigen Segmente 60, 62 um das Filterelement herum angebracht und entlang der Linien 64, 66 verbunden, um den unteren, kreisförmigen Stützring 54 zu bilden. Zusätzlich kann noch eine Schlauchklammer hinzugefügt werden, um die zusammengefügten Stützringe zu verstärken. Wenn der untere Stützring 54 einmal um das Sieb herum montiert ist, wird jede der vielen Haltestangen 22 in ihre Gewindeöffnung im unteren Stützring 54 eingesetzt. Jede der Stangen 22 wird vorzugsweise ein- oder zweimal gedreht, um sie mit der Gewindeöffnung zu verbinden. Der obere Stützring 52 wird dann montiert, indem man die oberen halbkreisförmigen Segmente 56, 58 miteinander verzahnt. Der obere Stützring 52 wird dann so angeordnet, daß die oberen Gewindeöffnungen nach den Stangen ausgerichtet sind. Jede der Stangen 22 wird dann gedreht, um sowohl die oberen als auch die unteren Gewindeöffnungen zu verbinden. Es ist beabsichtigt, daß die Stellen, an denen die halbkreisförmigen Segmente des oberen und unteren Stützrings verbunden sind, ringförmig um 90 ° versetzt sind, wie es in Fig. 5 gezeigt ist.

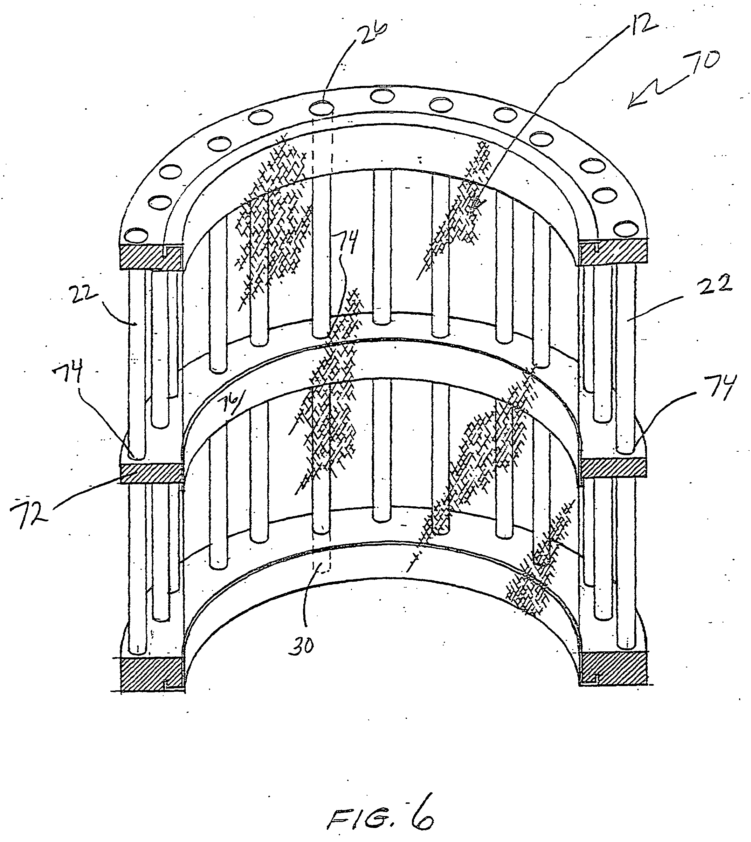

Fig. 6 ist eine Querschnittsdarstellung einer alternativen Anwendungsvariante, dem Siebkorb 70. Dieser Siebkorb ist im wesentlichen derselbe Filtersiebkorb, der in Fig. 1 gezeigt ist, mit der Ausnahme, daß dieser Korb einen mittleren Stützring 72 hat. Der mittlere Stützring 72 enthält eine Vielzahl von um den Kreisumfang verteilten mittleren Öffnungen 74, von denen jede einzeln einer der oberen Gewindeöffnungen 26 und einer der unteren Gewindeöffnungen 30 zugeordnet ist, so daß jede der Haltestangen 22 durch eine entsprechende zugeordnete der mittleren Öffnungen 74 hindurchgeht. Der mittlere Stützring 72 beinhaltet eine Wandverkleidung 76, an der ein Teil des zylindrischen, perforierten Siebs angeheftet ist (zum Beispiel durch Schweißen oder Hartlöten).

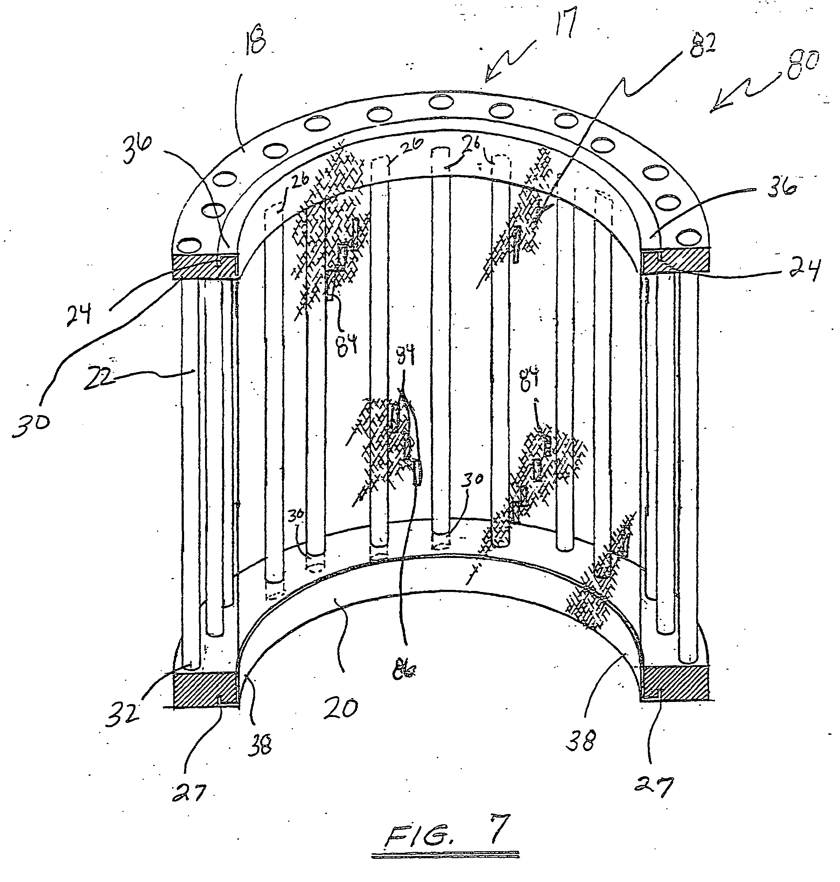

Fig. 7 zeigt eine Querschnittsdarstellung des Siebkorbes 80, der ein Filterelement 82 mit versetzt angeordenten Stäben 84 enthält, die hier und da in das Netz 86 eingearbeitet sind (zum Beispiel, indem man sie durch Hartlöten daran befestigt). Bedeutsam ist, daß die Stäbe 84 mithelfen, in Zusammenarbeit mit dem Rotor des Drucksortierers (nicht dargestellt) einen turbulenten Fluß innerhalb des Siebkorbes zu erzeugen. Weil der Rotor innerhalb des Filterelements 82 rotiert, arbeiten die Flügel des Rotors besonders mit den Stäben 84 zusammen, um eine Turbulenz zu erzeugen, die hilft, die Fasern vom Netz 86 zu entfernen. Die Stäbe 84 sind vorzugsweise mehrere Zoll lang. Dabei können die Stäbe 84 kürzer oder länger gewählt werden, abhängig von Faktoren wie der Gesamtgröße des Korbes, der wässrigen Lösung, die gefiltert werden soll, und den Eigenschaften des Rotors. Die Stäbe 84 können auf verschiedene Art und Weise innerhalb des Netzes 86 angeordnet werden, auch schraubenlinienförmig.

Obwohl die vorliegende Erfindung unter Berücksichtigung mehrerer bevorzugter Anwendungsvarianten dargestellt und beschrieben wurde, könnten verschiedene Veränderungen, Auslassungen und Zusätze zur Form und deren Details vorgenommen werden, ohne daß man damit vom Gedanken und der Idee der Erfindung abweichen würde.

## Patentansprüche

1. Siebkorb für einen Drucksortierer zum Filtern, insbesondere Entfernung von Verunreinigungen aus einer wässrigen Fasersuspension mit
- einem zylindrischen, perforierten Filterelement (12);
- Verankerungen (36, 38), die besagtes Filterelement (12) an gegenüberliegenden Enden umgeben und daran befestigt sind;
- mindestens zwei Stützringen (18, 20, 52, 54), die besagtes Filterelement (12) umgeben; und
- Mitteln, um den Abstand der Stützringe (18, 20, 52, 54) zwischen axial zusammengezogenen Positionen, gelöst von besagten Verankerungen (36, 38), und axial gestreckten Positionen, verbunden mit besagten Verankerungen (36, 38), axial auf das Filterelement einzustellen.

2. Siebkorb nach Anspruch 1,
**gekennzeichnet durch,**
- einen oberen Stützring (18), der eine obere, kreisförmige Verankerungsnut (24) und eine Vielzahl von um den Kreisumfang verteilten oberen Gewindeöffnungen (26) hat;
- einen unteren Stützring (20), der eine untere, kreisförmige Verankerungsnut (27) und eine Vielzahl von um den Kreisumfang verteilten unteren Gewindeöffnungen (30) hat, von denen jede nach einer entsprechenden gegenüberliegenden besagter oberer Gewindeöffnungen (26) ausgerichtet ist;
- eine obere Verankerung (36) des zylindrischen Filterelements (12), die mit besagter oberer, kreisförmiger Verankerungsnut (24) verbunden werden kann, und eine untere Verankerung (38), die mit besagter unterer, kreisförmiger Verankerungsnut (27) verbunden werden kann; und
- eine Mehrzahl von Haltestangen (22), die sich zwischen besagten Stützringen (18, 20) erstrecken,
wobei jede dieser Haltestangen (22) Enden mit entgegengesetzten Gewinden hat, die wiederum mit den oberen und unteren Gewindeöffnungen (26, 30) verbunden werden, wodurch das Drehen der Haltestangen (22) in eine Richtung den Abstand zwischen den Stützringen (18, 20) verringert, um die Verankerungen (36, 38) von den Verankerungsnuten (24, 27) zu lösen, und das Drehen der Haltestangen (22) in die entgegengesetzte Richtung den Abstand zwischen den Stützringen (18, 20) vergrößert, um die Verankerungen (36, 38) in den Verankerungsnuten (24, 27) zu fixieren.

3. Siebkorb nach Anspruch 1 oder 2,
**dadurch gekennzeichnet,**
**daß** das Filterelement (12) axial gespannt ist.

4. Siebkorb nach Anspruch 1, 2 oder 3,
**dadurch gekennzeichnet,**
**daß** besagte obere und untere Verankerungen (36, 38) flexibel sind.

5. Siebkorb nach Anspruch 4,
**dadurch gekennzeichnet,**
**daß** die Verankerungen (36, 38) Verankerungsbänder sind.

6. Siebkorb nach Anspruch 1, 2 oder 3,
**dadurch gekennzeichnet,**
**daß** besagte obere und untere Verankerungen (36, 38) starr sind.

7. Siebkorb nach Anspruch 1, 2, 3, 4 , 5 oder 6,
**dadurch gekennzeichnet,**
**daß** besagte obere und untere Stützringe (18, 20) in halbkreisförmige Segmente (56, 58, 60, 62) teilbar sind.

8. Siebkorb nach Anspruch 7,
**dadurch gekennzeichnet,**
**daß** er ferner eine Ringklammer enthält, die besagten oberen Stützring umgibt.

9. Siebkorb nach Anspruch 7,
**dadurch gekennzeichnet,**
**daß** die Stellen, an denen besagte halbkreisförmige Segmente (56, 58, 60, 62) besagter oberer und unterer Stützringe verbunden sind, ringförmig um 90 ° versetzt sind.

10. Siebkorb nach Anspruch 2, 3, 4, 5 oder 6,
**dadurch gekennzeichnet,**
**daß** besagter oberer Stützring (52) eine Mehrzahl an oberen Segmenten (56, 58) und besagter unterer Stützring (54) eine Mehrzahl an unteren Segmenten (60, 62) enthält.

11. Siebkorb nach einem der Ansprüche 2 bis 10,
**dadurch gekennzeichnet,**
**daß** er ferner einen mittleren Stützring (72) enthält, der zwischen besagten oberen und unteren Stützringen (52, 54) angebracht ist und eine Vielzahl an um den Kreisumfang verteilten mittleren Öffnungen hat, von denen jede einzelne einer besagten oberen Gewindeöffnung (26) und eine besagten unteren Gewindeöffnung (30) zugeordnet ist so daß jede besagter Haltestangen (22) durch eine der zugeordneten besagter mittlerer Öffnungen (74) hindurchgeht.

12. Siebkorb nach Anspruch 11,
**dadurch gekennzeichnet,**
**daß** besagter mittlerer Stützring (72) eine Wandverkleidung beinhaltet, an der besagtes zylindrisches Filterelement (12) durch Schweißen befestigt ist.

13. Siebkorb nach einem der voranstehenden Ansprüche,
**dadurch gekennzeichnet,**
**daß** besagte obere und untere Verankerungen (36, 38) U-förmig sind.

14. Siebkorb nach einem der Ansprüche 2 bis 13,
**dadurch gekennzeichnet,**
**daß** jede der besagten Haltestangen (22) einen Schraubenkopf enthält, der das Drehen der Stangen vereinfacht.

15. Siebkorb nach einem der voranstehenden Ansprüche,
**dadurch gekennzeichnet,**
**daß** das Filterelement (12) ein zylindrisches Blech mit einer großen Anzahl von Sieböffnungen ist.

16. Siebkorb nach einem der Ansprüche 2 bis 14,
**dadurch gekennzeichnet,**
**daß** besagtes zylindrisches Filterelernent (12) ein Netz (46, 48) ist, welches sich überlappende Stangen (84) enthält, die teilweise in das Netz (42, 86) eingefügt sind.

17. Siebkorb nach Anspruch 16,
**dadurch gekennzeichnet,**
**daß** besagte sich überlappende Stangen (84) mehrere Zoll lang und mit besagtem Netz (86) verschweißt sind.

18. Siebkorb nach einem der voranstehenden Ansprüche,
**dadurch gekennzeichnet,**
**daß** er ferner eine Montageflansch enthält, die an einer axialen Außenfläche des besagten Stützrings angebracht ist.

19. Siebkorb nach einem der voranstehenden Ansprüche,
**dadurch gekennzeichnet,**
**daß** er ferner eine kreisförmige Klammer enthält, die an einer axialen Außenfläche des besagten Stützrings (18, 20, 52, 54) befestigt ist und an dieselbe grenzt.

20. Siebkorb nach Anspruch 1, **gekennzeichnet durch**
- einen oberen Stützring (18), der eine obere kreisförmige Verankerungsnut (24) und eine Vielzahl an um den Kreisumfang verteilten, längsgerichteten, oberen Gewindeöffnungen (26) hat;
- einen unteren Stützring (20), der eine untere kreisförmige Verankerungsnut (27) und eine Vielzahl an um den Kreisumfang verteilten, längsgerichteten, unteren Gewindeöffnungen (30) hat, von denen jede parallel zur Achse einer der besagten Vielzahl an längsgerichteten, oberen Gewindeöffnungen zugeordnet ist;
- mindestens einen weiteren Stützring (72), der eine Vielzahl von um den Kreisumfang verteilten mittleren Öffnungen (74) hat, von denen jede einer besagter oberer Gewindeöffnungen (26) und einer besagter unterer Gewindeöffnungen (28) zugeordnet ist, so daß jede der besagten Haltestangen (22) **durch** eine entsprechende dieser besagten mittleren Öffnungen (74) hindurchgeht;
- einen entfern- und ersetzbaren zylindrischen Sieb, das eine obere Verankerung (36) hat, die in die besagte obere, kreisförmige Verankerungsnut (24) eingesetzt mit diesem verbunden werden kann und eine untere Verankerung (38), die in besagte untere, kreisförmige Verankerungsnut (27) eingesetzt mit diesem verbunden werden kann; und
- eine Vielzahl an Haltestangen (22), von denen jede **durch** eine entsprechende jener besagten längsgerichteten oberen und unteren Gewindeund jener besagten mittleren Öffnungen hindurchgeht, wobei jede Stange ein erstes und ein zweites Ende mit einem jeweils entgegengesetzten Gewinde enthält, so daß Drehen der Stangen in eine erste Richtung den Abstand zwischen besagtem oberem Stützring (18) und besagtem unterem Stützring (20) vergrößert, um besagtes zylindrisches Sieb zu spannen und Drehen in eine zweite Richtung den Abstand zwischen besagtem oberem Stützring (18) und besagtem unterem Stützring (20) verringert, was ein Entfernen des besagten zylindrischen Siebs aus besagtem unterem Stützring (18) und besagtem oberem Stützring (20) erleichtert.

21. Siebkorb nach Anspruch 1 mit einem entfern- und ersetzbaren Filter mit einer Rahmenstruktur,
- einem oberen Stützring, der wiederum eine obere, kreisförmige Verankerungsnut und eine Vielzahl an um den Kreisumfang verteilten, längsgerichteten oberen Gewindeöffnungen aufweist,
- einem unteren Stützring, der eine untere Verankerungsnut und eine Vielzahl an um den Kreisumfang verteilten, längsgerichteten unteren Gewindeöffnungen aufweist, von denen jede parallel zur Achse einer der Vielzahl an längsgerichteten oberen Gewindeöffnungen zugeordnet ist, und
- einer Vielzahl von Haltestangen, von denen jede durch eine entsprechende der längsgerichteten unteren und oberen Gewindeöffnungen hindurchgeht,
**dadurch gekennzeichnet,**
**daß** jede Stange ein erstes und ein zweites Ende mit entgegengesetzt geschnittenem Gewinde enthält, besagter entfern- und ersetzbarer Filter beinhaltet:
- ein oberes Verankerungsband, das eingesetzt in die obere, kreisförmige Verankerungsnut mit diesem verbunden werden kann;
- ein unteres Verankerungsband, das eingesetzt in die untere, kreisförmige Verankerungsnut mit diesem verbunden werden kann; und
- ein zylindrisches Sieb, das zwischen besagten oberen und unteren Verankerungsbändem verbunden ist, wobei das Drehen der Stangen in eine erste Richtung den Abstand zwischen dem oberen Stützring und dem unteren Stützring vergrößert und daß besagtes zylindrisches Sieb gespannt wird und das Drehen der Stangen in eine zweite Richtung den Abstand zwischen dem oberen Stützring und dem unteren Stützring verringert, wodurch ermöglicht wird, besagtes Filterelement aus dem Rahmen zu entfernen.

## Claims

1. Screening basket for a pressure screening device for filtering, in particular for removing contaminants from an aqueous pulp suspension, comprising
- a cylindrical, perforated filter element (12);
- fixings (36, 38) which surround the filter element (12) at opposite ends and are fixed thereto;
- at least two support rings (18, 20, 52, 54) surrounding the filter element (12); and
- means of adjusting the distance of the support rings (18, 20, 52, 54) axially on the filter element between axially contracted positions, released from the fixings (36, 38), and axially expanded positions, connected to the fixings (36, 38).

2. Screening basket according to claim 1, **characterised by**
- an upper support ring (18) having an upper, circular fixing groove (24) and a large number of upper threaded apertures (26) distributed around the circumference of the circle;
- a lower support ring (20), having a lower, circular fixing groove (27) and a large number of lower threaded apertures (30) distributed around the circumference of the circle, each of which threaded apertures is aligned with a corresponding, opposing upper threaded aperture (26);
- an upper fixing (36) of the cylindrical filter element (12), which can be connected to the upper, circular fixing groove (24), and a lower fixing (38) which can be connected to the lower, circular fixing groove (27); and
- a plurality of holding rods (22) extending between the support rings (18, 20)
wherein each holding rod (22) has ends with opposing threads, which in turn are connected to the upper and lower threaded apertures (26, 30), whereby rotation of the holding rods (22) in one direction reduces the distance between the support rings (18, 20) in order to release the fixings (36, 38) from the fixing grooves (24, 27), and rotation of the holding rods (22) in the opposite direction increases the distance between support rings (18, 20) in order to fix the fixings (36, 38) in the fixing grooves (24, 27).

3. Screening basket according to claim 1 or 2, **characterised in that** the filter element (12) is axially tautened.

4. Screening basket according to claim 1, 2, or 3, **characterised in that** the upper and lower fixings (36, 38) are flexible.

5. Screening basket according to claim 4, **characterised in that** the fixings (36, 38) are fixing strips.

6. Screening basket according to claim 1, 2, or 3, **characterised in that** the upper and lower fixings (36, 38) are rigid.

7. Screening basket according to claim 1, 2, 3, 4, 5 or 6, **characterised in that** the upper and lower support rings (18, 20) are divisible into semi-circular segments (56, 58, 60, 62).

8. Screening basket according to claim 7, **characterised in that** it further comprises an annular clip, which surrounds the upper support ring.

9. Screening basket according to claim 7, **characterised in that** the points at which the semi-circular segments (56, 58, 60, 62) of the upper and lower support rings are connected are spaced annularly at 90°.

10. Screening basket according to claim 2, 3, 4, 5 or 6, **characterised in that** the upper support ring (52) comprises a plurality of upper segments (56, 58) and the lower support ring (54) comprises a plurality of lower segments (60, 62).

11. Screening basket according to one of claims 2 to 10, **characterised in that** it further comprises a central support ring (72), which is mounted between the upper and lower support rings (52, 54) and has a large number of central apertures distributed about the circumference of the circle, each of which individually has an upper threaded aperture (26) and a lower threaded aperture (30), so that each holding rod (22) passes through one of the allocated central apertures (74).

12. Screening basket according to claim 11, **characterised in that** the central support ring (72) comprises a wall lining to which the cylindrical filter element (12) is fixed by welding.

13. Screening basket according to one of the preceding claims, **characterised in that** the upper and lower fixings (36, 38) are U-shaped.

14. Screening basket according to one of claims 2 to 13, **characterised in that** each of the holding rods (22) comprises a screw head which simplifies rotation of the rods.

15. Screening basket according to one of the preceding claims, **characterised in that** the filter element (12) is a cylindrical plate with a large number of filter apertures.

16. Screening basket according to one of claims 2 to 14, **characterised in that** the cylindrical filter element (12) is a mesh (46, 48), comprising overlapping rods (84) which are partially inserted into the mesh (42, 86).

17. Screening basket according to claim 16, **characterised in that** the overlapping rods (84) are plural inches long and are welded to the mesh (86).

18. Screening basket according to one of the preceding claims, **characterised in that** it further comprises an assembly flange, which is mounted on an axial outer face of the support ring.

19. Screening basket according to one of the preceding claims, **characterised in that** it further comprises a circular clip, which is fixed to an axial outer face of the support ring (18, 20, 52, 54) and abuts the same.

20. Screening basket according to claim 1, **characterised by**
- an upper support ring (18), which has an upper circular fixing groove (24) and a large number of longitudinally oriented upper threaded apertures (26) distributed around the circumference of the circle;
- a lower support ring (20), which as a lower circular fixing groove (27) and a large number of longitudinally oriented lower threaded apertures (30) distributed around the circumference of the circle, each of which is allocated to one of the large number of longitudinally oriented upper threaded apertures, parallel to the axis;
- at least one further support ring (72), which has a large number of central apertures (74) distributed around the circumference of the circle, each of which is allocated to one of the upper threaded apertures (26) and one of the lower threaded apertures (28), so that each of the holding rods (22) passes through a corresponding one of the central apertures (74);
- a removable and replaceable cylindrical filter, which has an upper fixing (36), which can be inserted in and connected to the upper circular fixing groove (24), and a lower fixing (38), which can be inserted in and connected to the lower, circular fixing groove (27); and
- a large number of holding rods (22), each of which passes through a corresponding one of the longitudinally oriented upper and lower threaded apertures and one of the central apertures, each rod comprising a first and second end with a respectively opposite thread, so that rotation of the rods in a first direction increases the distance between the upper support ring (18) and the lower support ring (20) in order to tauten the cylindrical filter, and rotation in a second direction reduces the distance between the upper support ring (18) and the lower support ring (20), which simplifies removal of the cylindrical filter from the lower support ring (18) and the upper support ring (20).

21. Screening basket according to claim 1, having a removable and replaceable filter with a frame structure,
- an upper support ring, which in turn has an upper, circular fixing groove and a large number of upper threaded apertures oriented longitudinally and distributed around the circumference of the circle,
- a lower support ring, which has a lower fixing groove and a large number of lower threaded apertures oriented longitudinally and distributed around the circumference of the circle, each of which is allocated parallel to the axis to the large number of longitudinally oriented upper threaded apertures, and
- a large number of holding rods, each of which passes through a corresponding one of the longitudinally oriented lower and upper threaded apertures,
**characterised in that** each rod comprises a first and second end with opposingly cut thread, and the removable and replaceable filter comprises:
- an upper fixing strip, which can be inserted in the upper circular fixing groove and can be connected thereto;
- a lower fixing strip, which can be inserted in the lower, circular fixing groove and can be connected thereto; and
- a cylindrical filter, which is connected between the upper and lower fixing strips, rotation of the rods in a first direction increasing the distance between the upper support ring and the lower support ring, and **in that** the cylindrical filter is tautened, and rotation of the rods in a second direction reduces the distance between the upper support ring and the lower support ring, whereby it is possible to remove the filter element from the frame.

## Revendications

1. Tambour cylindrique de tamisage pour un appareil de tamisage sous pression destiné à la filtration, notamment à l'élimination d'impuretés d'une suspension fibreuse aqueuse, comprenant
- un élément de filtration (12) cylindrique et perforé ;
- des pièces d'ancrage (36, 38) qui ceinturent ledit élément de filtration (12) à des extrémités opposées, et sont fixées à ce dernier ;
- au moins deux bagues d'appui (18, 20, 52, 54) ceinturant ledit élément de filtration (12) ; et
- des moyens pour régler axialement, sur l'élément de filtration, la distance séparant les bagues d'appui (18, 20, 52, 54) entre des positions axialement contractées, dissociées d'avec lesdites pièces d'ancrage (36, 38), et des positions axialement déployées, reliées auxdites pièces d'ancrage (36, 38).

2. Tambour cylindrique de tamisage selon la revendication 1, **caractérisé par**
- une bague d'appui (18) supérieure comportant une rainure d'ancrage (24) supérieure circulaire et une multiplicité d'orifices taraudés (26), répartis sur la périphérie ;
- une bague d'appui (20) inférieure comportant une rainure d'ancrage (27) inférieure circulaire et une multiplicité d'orifices taraudés (30) inférieurs répartis sur la périphérie, et dont chacun est orienté vers l'un correspondant desdits orifices taraudés (26) supérieurs, situé eh vis-à-vis ;
- une pièce d'ancrage (36) supérieure de l'élément de filtration (12) cylindrique, qui peut être reliée à ladite rainure d'ancrage (24) supérieure circulaire, et une pièce d'ancrage (38) inférieure qui peut être reliée à ladite rainure d'ancrage (27) inférieure circulaire ; et
- une pluralité de barres de retenue (22) s'étendant entre lesdites bagues d'appui (18, 20),
chacune de ces barres de retenue (22) présentant des extrémités munies de filetages à pas opposés qui sont reliés, à leur tour, aux orifices taraudés (26, 30) supérieurs et inférieurs, de sorte que la rotation des barres de retenue (22) dans une direction réduit la distance entre les bagues d'appui (18, 20), pour dissocier les pièces d'ancrage (36, 38) d'avec les rainures d'ancrage (24, 27), et la rotation desdites barres de retenue (22) dans la direction opposée augmente la distance entre lesdites bagues d'appui (18, 20) en vue de verrouiller lesdites pièces d'ancrage (36, 38) à demeure dans lesdites rainures d'ancrage (24, 27).

3. Tambour cylindrique de tamisage selon la revendication 1 ou 2, **caractérisé en ce que** l'élément de filtration (12) est tendu dans le sens axial.

4. Tambour cylindrique de tamisage selon la revendication 1, 2 ou 3, **caractérisé en ce que** lesdites pièces d'ancrage (36, 38) supérieure et inférieure sont douées de flexibilité.

5. Tambour cylindrique de tamisage selon la revendication 4, **caractérisé en ce que** les pièces d'ancrage (36, 38) sont des rubans d'ancrage.

6. Tambour cylindrique de tamisage selon la revendication 1, 2 ou 3, **caractérisé en ce que** lesdites pièces d'ancrage (36, 38) supérieure et inférieure sont rigides.

7. Tambour cylindrique de tamisage selon la revendication 1, 2, 3, 4, 5 ou 6, **caractérisé en ce que** lesdites bagues d'appui (18, 20) supérieure et inférieure peuvent être scindées en des segments semi-circulaires (56, 58, 60, 62).

8. Tambour cylindrique de tamisage selon la revendication 7, **caractérisé en ce qu'**il comprend, en outre, une agrafe annulaire qui ceinture ladite bague d'appui supérieure.

9. Tambour cylindrique de tamisage selon la revendication 7, **caractérisé en ce que** les emplacements, auxquels sont reliés lesdits segments semi-circulaires (56, 58, 60, 62) desdites bagues d'appui supérieure et inférieure, sont décalés annulairement de 90°.

10. Tambour cylindrique de tamisage selon la revendication 2, 3, 4, 5 ou 6, **caractérisé en ce que** ladite bague d'appui (52) supérieure comprend une pluralité de segments supérieurs (56, 58), et ladite bague d'appui (54) inférieure comprend une pluralité de segments inférieurs (60, 62).

11. Tambour cylindrique de tamisage selon l'une des revendications 2 à 10, **caractérisé en ce qu'**il comprend, en outre, une bague d'appui (72) centrale interposée entre lesdites bagues d'appui (52, 54) supérieure et inférieure, et présentant une multiplicité d'orifices centraux répartis sur la périphérie et parmi lesquels chaque orifice individuel est associé à un orifice taraudé (26) supérieur précité et à un orifice taraudé (30) inférieur précité, de sorte que chacune desdites barres de retenue (22) traverse l'un desdits orifices centraux (74) associés.

12. Tambour cylindrique de tamisage selon la revendication 11, **caractérisé en ce que** ladite bague d'appui (72) centrale comprend un habillage de paroi auquel ledit élément de filtration (12) cylindrique est fixé par soudage.

13. Tambour cylindrique de tamisage selon l'une des revendications précédentes, **caractérisé en ce que** lesdites pièces d'ancrage (36, 38) supérieure et inférieure sont configurées en U.

14. Tambour cylindrique de tamisage selon l'une des revendications 2 à 13, **caractérisé en ce que** chacune desdites barres de retenue (22) comprend une tête de vis facilitant la rotation desdites barres.

15. Tambour cylindrique de tamisage selon l'une des revendications précédentes, **caractérisé en ce que** l'élément de filtration (12) est une tôle cylindrique pourvue d'un grand nombre d'orifices de tamisage.

16. Tambour cylindrique de tamisage selon l'une des revendications 2 à 14, **caractérisé en ce que** ledit élément cylindrique de filtration (12) est un entrelacs (46, 48) renfermant des tiges (84) en chevauchement qui sont, en partie, intégrées dans ledit entrelacs (42, 86).

17. Tambour, cylindrique de tamisage selon la revendication 16, **caractérisé en ce que** lesdites tiges (84) en chevauchement présentent une longueur de plusieurs pouces, et sont soudées audit entrelacs (86).

18. Tambour cylindrique de tamisage selon l'une des revendications précédentes, **caractérisé en ce qu'**il comprend, en outre, une aile de montage installée sur une surface extérieure axiale de ladite bague d'appui.

19. Tambour cylindrique de tamisage selon l'une des revendications précédentes, **caractérisé en ce qu'**il comprend, en outre, une agrafe circulaire qui est fixée à une surface extérieure axiale de ladite bague d'appui (18, 20, 52, 54), et est limitrophe de ladite surface.

20. Tambour cylindrique de tamisage selon la revendication 1, **caractérisé par**
- une bague d'appui (18) supérieure présentant une rainure d'ancrage (24) supérieure circulaire et une multiplicité d'orifices taraudés (26) supérieurs, orientés longitudinalement et répartis sur la périphérie ;
- une bague d'appui (20) inférieure présentant une rainure d'ancrage (27) inférieure circulaire et une multiplicité d'orifices taraudés (30) inférieurs orientés longitudinalement, répartis sur la périphérie et dont chacun est associé, parallèlement à l'axe, à l'un desdits multiples orifices taraudés supérieurs orientés longitudinalement ;
- au moins une bague d'appui (72) supplémentaire présentant une multiplicité d'orifices centraux (74) répartis sur là périphérie, dont chacun est associé à l'un desdits orifices taraudés (26) supérieurs et à l'un desdits orifices taraudés (28) inférieurs, de sorte que chacune desdites barres de retenue (22) traverse l'un correspondant desdits orifices centraux (74) ;
- un tamis cylindrique amovible et remplaçable, qui comprend une pièce d'ancrage (36) supérieure insérée dans ladite rainure d'ancrage (24) supérieure circulaire, à laquelle elle peut être reliée, et une pièce d'ancrage (38) inférieure insérée dans ladite rainure d'ancrage (27) inférieure circulaire, à laquelle elle peut être reliée ; et
- une multiplicité de barres de retenue (22) dont chacune traverse l'un correspondant desdits orifices taraudés supérieurs et inférieurs orientés longitudinalement, et desdits orifices centraux, chaque barre possédant des première et seconde extrémités respectivement munies d'un filetage à pas opposé, de sorte qu'une rotation desdites barres dans une première direction augmente la distance entre ladite bague d'appui (18) supérieure et ladite bague d'appui (20) inférieure, en vue de tendre ledit tamis cylindrique, et une rotation dans une seconde direction réduisant la distance entre ladite bague d'appui (18) supérieure et ladite bague d'appui (20) inférieure, ce qui permet d'extraire plus facilement ledit tamis cylindrique de ladite bague d'appui (18) inférieure et de ladite bague d'appui (20) supérieure.

21. Tambour cylindrique de tamisage selon la revendication 1, comprenant un filtre amovible et remplaçable équipé d'une structure d'encadrement,
- une bague d'appui supérieure comportant, à son tour, une rainure d'ancrage supérieure circulaire et une multiplicité d'orifices taraudés supérieurs qui sont orientés longitudinalement et sont répartis sur la périphérie,
- une bague d'appui inférieure comportant une rainure d'ancrage inférieure et une multiplicité d'orifices taraudés inférieurs orientés longitudinalement, répartis sur la périphérie et dont chacun est associé, parallèlement à l'axe, à l'un des multiples orifices taraudés supérieurs orientés longitudinalement, et
- une multiplicité de barres de retenue dont chacune traverse l'un correspondant desdits orifices taraudés inférieurs et supérieurs orientés longitudinalement,
**caractérisé en ce que** chaque barre possède des première et seconde extrémités à filetages à taillages inversés, ledit filtre amovible et remplaçàble comprenant :
- un ruban d'ancrage supérieur inséré dans la rainure d'ancrage supérieure circulaire, à laquelle il peut être relié ;
- un ruban d'ancrage inférieur inséré dans la rainure d'ancrage inférieure circulaire, à laquelle il peut être relié ; et
- un tamis cylindrique relié entre lesdits rubans d'ancrage supérieur et inférieur, la rotation des barres dans une première direction augmentant la distance entre la bague d'appui supérieure et la bague d'appui inférieure, avec tension dudit tamis cylindrique, et la rotation desdites barres dans une seconde direction réduisant la distance entre ladite bague d'appui supérieure et ladite bague d'appui inférieure, ce qui permet d'extraire ledit élément de filtration hors du cadre.
